# EUROPEAN PATENT SPECIFICATION

(11) **EP 1 736 996 B1**
(45) Date of publication and mention of the grant of the patent: **17.09.2008**
(21) Application number: 06007104.0
(22) Date of filing: 04.04.2006
(51) Int. Cl.: G21C 3/322, G21C 3/356

(54) **Nuclear fuel assembly with spacer grids and eccentric support of fuel rods**
Kernbrennstabbündel mit Abstandhaltern und exzentrischer Halterung der Brennstäbe
Assemblage de combustible nucléaire muni de grilles d'espacement avec maintien des barreaux de combustible en position excentrée

(30) Priority: 04.04.2005 US 98657
(43) Date of publication of application: 27.12.2006
(73) Proprietor: Westinghouse Electric Company LLC, Monroeville, PA 15146-2866 (US)
(72) Inventor: Sparrow, James A., Irmo, South Carolina 29063 (US)
(74) Representative: Gallo, Wolfgang

(56) References cited:
- WO-A2-02/03393
- BE-A1- 796 113
- DE-A1- 19 523 770
- US-B1- 6 516 043

## Description

### BACKGROUND OF THE INVENTION

### Field of the Invention

The present invention relates to nuclear reactor fuel assemblies and more particularly to a nuclear reactor fuel assembly wherein the support grids have dimples with an increased height that causes the fuel rod to assume a non-linear shape.

### Description of the Prior Art

In a typical pressurized water reactor (PWR), the reactor core is comprised of a large number of generally vertically, elongated fuel assemblies. The fuel assemblies include a frame assembly structured to support a plurality of fuel rods. The fuel assembly includes a top nozzle, a bottom nozzle, a plurality of support grids, intermediate flow mixing grids, and a plurality of thimble tubes. The support grids are attached to the plurality of elongated thimble tubes which extend vertically between the top and bottom nozzles. The thimble tubes typically receive control rods, plugging devices, or instrumentation therein. A fuel rod includes a nuclear fuel typically clad in a cylindrical metal tube. Generally, water enters the fuel assembly through the bottom nozzle and passes vertically upward through the fuel assembly. As the water passes over the fuel rods, the water is heated until the water exits the top nozzle at a very elevated temperature.

The support grids are used to position the fuel rods in the reactor core, resist fuel rod vibration, provide lateral support for the fuel rods and, to some extent, vertically restrain the fuel rods against longitudinal movement. The support grids are commonly positioned approximately 50 cm (20 inches) apart in the axial direction to provide mechanical support to the rods. A common problem in the PWR fuel industry is vibration of the fuel rod/support system as a natural response to coolant flow. This phenomenon is manifested as grid-to-rod fretting, which can ultimately lead to a breach in the fuel rod cladding and leakage of nuclear fuel material into the coolant. One type of conventional grid design includes a plurality of interleaved straps that together form an egg-crate configuration having a plurality of generally square cells which individually accept the fuel rods therein. Depending upon the configuration of the thimble tubes, the thimble tubes can either be received in cells that are sized the same as those that receive fuel rods therein, or can be received in relatively larger thimble cells defined in the interleaved straps.

The straps are generally flat, elongated members having a plurality of relatively compliant springs and relatively rigid dimples extending perpendicularly from either side of the flat member. Slots are utilized to effect an interlocking engagement with adjacent straps, thereby creating a grid of "vertical" and "horizontal" straps which form generally square cells. The location of the springs and dimples are configured such that each cell typically has a spring on each of two adjacent sides. On each of the sides of the cell opposite the springs there are, typically, two dimples. The springs must be disposed opposite the arches so that the fuel rod is biased against the dimples by the springs. The springs and dimples of each cell engage the respective fuel rod extending through the cell thereby supporting the fuel rod at six points (two springs and four dimples) in each cell. Generally, the spring and dimple combination are sized to allow a linear fuel rod to extend through the center of the cell. That is, the fuel rod is generally straight from the bottom to the top of the fuel assembly. Preferably, each spring and/or dimple includes an arcuate, concave platform having a radius generally the same as a fuel rod. This concave platform helps distribute the radial load on the sides of the fuel rods. Typically, the springs apply a force of 22N-66N (5-15 lbs.) as built. This amount of force/pressure creates a significant stress in the spring structure.

The disadvantage to this type of structure is that irradiation and thermal effects alter the shape of the support grid allowing for a reduction in the lateral force applied to the fuel rod. That is, operational effects cause the springs to relax, the support grid to grow, and the fuel rod to shrink. Eventually, there are small clearances between the fuel rod and the springs and/or dimples. This space allows for vibration and more rapid degradation of the fuel rod due to fretting. The increased fretting reduces the operational life of the fuel rod.

There is, therefore, a need for an improved structure for securing fuel rods in a support grid.

There is a further need for a structure for securing fuel rods in a support grid that maintains the lateral pressure on a fuel rod for an extended operational period.

### SUMMARY OF THE INVENTION

These needs, and others, are met by the present invention which provides a support grid structured to hold a fuel rod in a non-linear shape. That is, the support grid is structured to alter the shape of a linear fuel rod into a shape preferably similar, but not limited, to a sine wave or a spiral. The support grid is structured in a manner similar to the prior art support grids except that the dimples have a greater height relative to the strap, *i.e.,* the dimples protrude a greater distance into the cell. With the support grids in this configuration, the fuel rods must be laterally deformed in order to pass through the cells. By having the extended dimples disposed in a selected pattern, varying from support grid to support grid, the overall shape of the fuel rod may be controlled. For example, in a series of three support grids, the upper and lower grids could have extended dimples on a first side while the middle support grid had the extended dimples on the opposite side. In this configuration, the lower support grid extended dimples would tend to deform the fuel rod away from the first side. The middle support grid extended dimples would tend to deform the fuel rod toward the first side. The upper support grid extended dimples would tend to deform the fuel rod away from the first side. Thus, if the support grids are evenly spaced, the fuel rod would have, generally, a shape similar to a sine wave. Likewise, by placing the extended dimples on selected sides of the cells in adjacent support grids, the shape of the fuel rod may be changed to various non-linear shapes. Additionally, each fuel rod may be structured to have a shape that is different from an adjacent fuel rod. In this manner, the flowpath of the coolant may be affected to further control heat transfer and vibration.

A non-linear fuel rod applies a lateral force against the dimples, extended dimples and/or springs. The lateral force may be estimated according to the following formula. P=(48*E*I*Delta)/(2*L)³ wherein; E is the Young's modulus for the fuel rod cladding material, I=π*(D⁴-d⁴)/64, D is the fuel rod cladding outer diameter, d is the fuel rod cladding inner diameter, L is the distance between support grids, and Delta is the eccentricity magnitude. The preferred eccentricity is 0,25-1,5 mm (10-60 mils). In a typical fuel rod, it is expected to have about 0,9 N (0.2 pounds) of lateral force for each 0,25 mm (ten mils) of eccentricity. That is, fuel rod stress would be about 353 N/cm² (500 psi) for each 0,25 mm (ten mils) of eccentricity. This is approximately 100 times less than the typical spring stress.

In addition to a lower stress, the design of the present invention is less susceptible to operational effects. That is, effects such as irradiation creep, which is dependent upon the amount of stress, has a reduced effect due to the reduced stress. Accordingly, the time period before a space develops between the support grid and the fuel rod is extended, possibly indefinitely. That is, a gap between the fuel rod and the support structure may never occur. Thus, the wear due to fretting is reduced and the useful life of the fuel rod is extended.

### BRIEF DESCRIPTION OF THE DRAWINGS

A further understanding of the invention can be gained from the following description of the preferred embodiments when read in conjunction with the accompanying drawings in which:
Figure 1 is an elevational view of a conventional nuclear fuel assembly.
Figure 2 is an isometric view of a strap.
Figure 3 is an isometric view of a support grid.
Figure 4 is a schematic side view of a fuel rod disposed through three prior art support grids.
Figure 5 is a schematic side view of a fuel rod disposed through three support grids of the present invention.
Figures 6A, 6B and 6C are schematic top views of cells with two extended dimples.

### DESCRIPTION OF THE PREFERRED EMBODIMENT

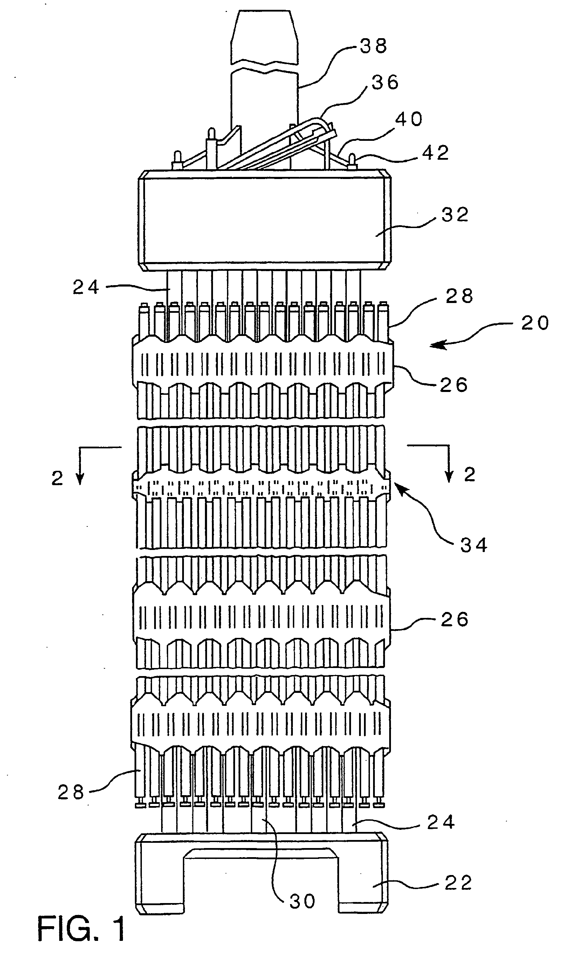

As shown in Figure 1, a fuel assembly 20 for a nuclear reactor is disposed in a water vessel (not shown) having an inlet at the bottom and an outlet at the top. The fuel assembly 20 comprises a lower end structure or bottom nozzle 22 for supporting the fuel assembly 20 on the lower core plate (not shown) in the core region of a reactor (not shown); a number of longitudinally extending control rod guide tubes, or thimbles 24, projecting upwardly from the bottom nozzle 22; a plurality of transverse support grids 26 axially spaced along the guide thimbles 24; an organized array of elongated fuel rods 28 transversely spaced and supported by the grids 26; an instrumentation tube 30 located in the center of the assembly; and an upper end structure or top nozzle 32 attached to the upper ends of the guide thimbles 24, in a conventional manner, to form an integral assembly capable of being conventionally handled without damaging the assembly components. The bottom nozzle 22 and the top nozzle 32 have end plates (not shown) with flow openings (not shown) for the upward longitudinal flow of a fluid coolant, such as water, to pass up and along the various fuel rods 28 to receive the thermal energy therefrom. To promote mixing of the coolant among the fuel rods 28, at least one mixing vane grid structure or Intermediate Flow Mixing grids 34 is disposed between a pair of support grids 26 and mounted on the guide thimbles 24.

The top nozzle 32 includes a transversely extending adapter plate (not shown) having upstanding sidewalls secured to the peripheral edges thereof in defining an enclosure or housing. An annular flange (not shown) is secured to the top of the sidewalls and suitably clamped to this flange are leaf springs 36 (only one of which being shown in Fig. 1) which cooperate with the upper core plate (not shown) in a conventional manner to prevent hydraulic lifting of the fuel assembly caused by upward coolant flow while allowing for changes in fuel assembly length due to core induced thermal expansion and the like. Disposed within the opening defined by the sidewalls of the top nozzle 32 is a conventional rod cluster control assembly 38 for vertically moving the control rods in the control rod guide thimbles 24 in a well-known manner. To form the fuel assembly 20, support grids 26 and an Intermediate Flow Mixing grid 34 are attached to the longitudinally extending guide thimbles 24 at predetermined axially spaced locations. The bottom nozzle 22 is suitably attached to the lower ends of the guide thimbles 24 and then the top nozzle 32 is attached to the upper ends of guide thimbles 24. The support grids 26 are vertically aligned. That is, the sides 70, 72, 74, 76 of a cell 56 (described below) in a particular position in a lower support grid 26 are aligned with the sides 70, 72, 74, 76 of a cell 56 in the same position in a higher support grid 26. This type of cell 56 alignment shall hereinafter be identified as vertically aligned cells 56. Fuel rods 28 are then inserted through the vertically aligned cells 56 on the grids 26 and Intermediate Flow Mixing grid 34. The fuel rods 28 are generally elongated cylinders having cladding with an outer diameter and an inner diameter. The nuclear fuel is disposed within the cladding. The cladding is typically made from, for example, zirconium alloy.

The fuel assembly 20 depicted in the drawings is of the type having a square array of fuel rods 28 with the control rod guide thimbles 24 being strategically arranged within the fuel rod array. Further, the bottom nozzle 22, the top nozzle 32, and likewise the support grids 26 are generally square in cross section. In that the specific fuel assembly 20 represented in the drawings is for illustrational purposes only, it is to be understood that neither the shape of the nozzles or the grids, or the number and configuration of the fuel rods 28 and guide thimbles 24 are to be limiting, and the invention is equally applicable to different shapes, configurations, and arrangements than the ones specifically shown.

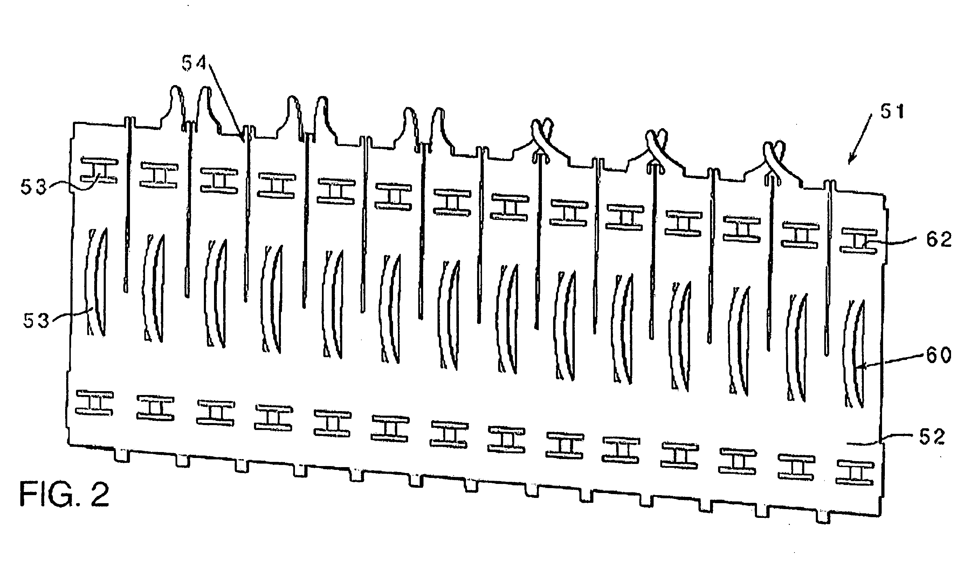

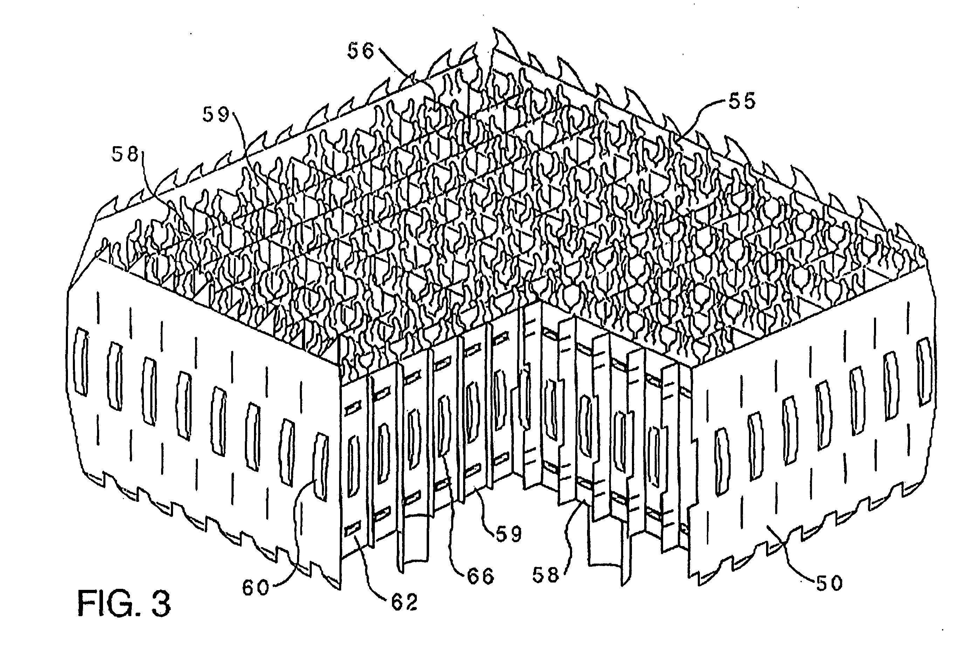

As is shown in Figure 2, the support grids 26 are formed from a plurality of straps 51 having a generally flat, elongated body 52 with series of protrusions 53 thereon. A strap 51 includes a plurality of coupling grooves 54 extending from either the upper edge or the lower edge. As is known in the art, the straps 51 having grooves 54 extending from the lower edge are disposed in a spaced parallel relation. A first set 58 of straps 51 with the grooves 54 extending from the upper edge are disposed in a spaced parallel relation that is generally perpendicular to a second set 59 of straps 51 having grooves 54 extending from the lower edge. In this configuration, as shown in Figure 3 the grooves 54 on the first and second sets 58, 59 of straps 51 are structured to engage each other thereby forming the support grid 50 with a plurality 55 of generally square cells 56 having a side length of about 3,8 cm (1.5 inches). The protrusions 53 on the sides of the cell 56 may be either a spring 60 or one or more, typically two, dimples 62 or extended dimples 80. The extended dimples 80 of the present invention extend between about 0,5 to 3,0 mm (0.02 to 0.12 inches) and preferably about 2,0 mm (0.08 inches), from the strap body 52. Within a cell 56 a spring 60 is always disposed across from a dimple 80. That is, a cell 56 has a first side 70, a second side, 72, a third side 74 and a fourth side 76 with the first and thirds sides 70, 74 opposed and generally parallel to each other and the second and fourth sides 72, 76 opposed and generally parallel to each other. Thus, if a spring 60 is on the first side 70, at least one dimple 62 or extended dimple 80 will be on the third side 74. There may be two dimples 62 or extended dimples 80, or a combination thereof, on a side opposite a spring 60.

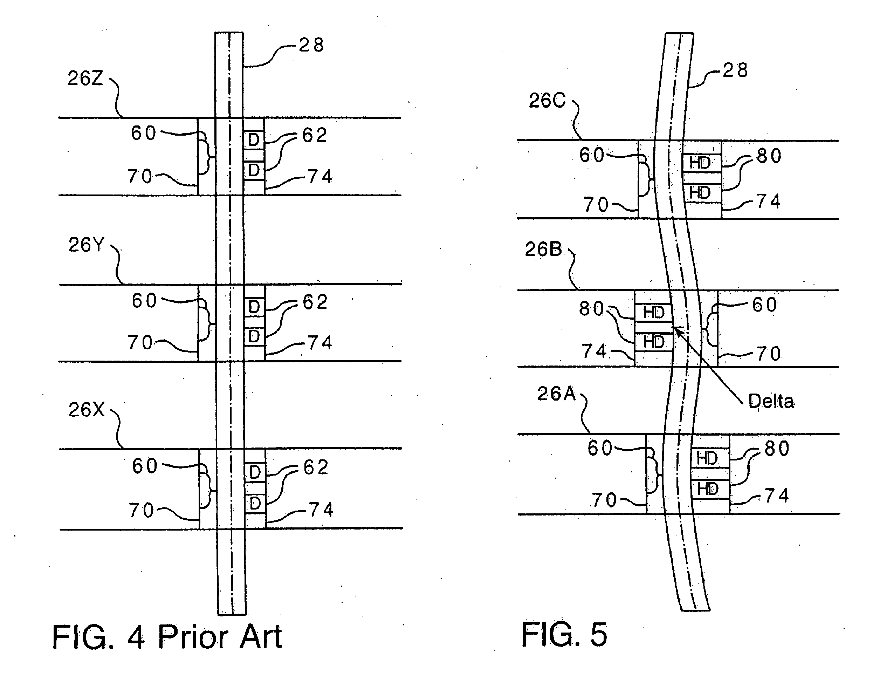

As shown schematically in Figure 4, in the prior art, a fuel rod 28 was supported between the protrusions 53, that is springs 60 and dimples 62, within the cells 56 of multiple support grids 26. As shown, the first, lowest support grid 26 is identified as support grid 26X, the second, middle support grid 26 is identified as support grid 26Y and the third, highest support grid 26 is identified as support grid 26Z. While only three support grids 26 are shown, a fuel assembly 20 typically has more than three support grids 26. On each support grid 26 a single cell 56 in a similar location on each support grid 26X, 26Y, 26Z is shown. For clarity, only two sides, the first and third sides 70, 74, of the cell 56 are shown schematically. As can be seen, the springs 60 on each support grid 26 are disposed on the first side 70. Similarly, the dimples 62 on each support grid 26 are disposed on the third side 74. Both the springs 60 and the dimples 62 extend into the cell 56 an equal distance. Further, the springs 60 and dimples 62 are sized to allow the fuel rod 28 to extend between the support grids 26 in a generally linear manner as shown by centerline 79. That is, the springs 60 and the dimples 62 extend a generally equal distance from the strap body 52. It is understood that the spring 60 and dimples 62 extending from the second and fourth sides 72, 76 (not shown) also extend a generally equal distance from the strap body 52. It is noted that where the springs 60 and dimples 62 all extend an equal distance from the strap bodies 52, the springs 60 and dimples 62 on different support grids 26 may be disposed on different sides 70, 72, 74, 76 of the cell 56 and the fuel rod 28 will still be generally linear.

The present invention provides for a series of support grids 26 structured to support at least one fuel rod 28 in a non-linear configuration. At least two support grids 26 are required wherein at least one set of aligned cells 56, that is a cell 56 at a certain location on one support grid 26 and the cell 56 at a similar location on another support grid 26, include at least one extended dimple 80 extending from one cell side 70, 72, 74, 76 on the first grid 26 and at least one extended dimple 80 on the second grid 26 extending from a cell side 70, 72, 74, 76 other than cell side 70, 72, 74, 76 having the at least one extended dimple 80 on the one support grid 26.

In a typical fuel assembly 20 there will be more that two support grids 26. Three support grids 26 are shown in the Figures, however, it is understood that a fuel assembly 20 may have more that three support grids 26. In a series of three support grids 26A, 26B, 26C (discussed below), at least one set of vertically aligned cells 56 may include cells 56 on the first and second support grids 26A, 26B as described above. That is a cell 56 at a certain location on the first support grid 26A and the cell 56 at a similar location on the second support grid 26A, include at least one extended dimple 80 extending from one cell side 70, 72, 74, 76 on the first support grid 26A and at least one extended dimple 80 on the second support grid 26B extending from a cell side 70, 72, 74, 76 other than cell side 70, 72, 74, 76 having the at least one extended dimple 80 on the first support grid 26. The third support grid 26C, however, may have the at least one extended dimple 80 extending from a cell side 70, 72, 74, 76 the same as the cell side 70, 72, 74, 76 having an extended dimple 80 on the first support grid 26A. In this configuration, and as shown in Figure 5 discussed below, the fuel rod 28 passing through such vertically aligned cells 56 is deformed into a generally sine wave shape. Alternatively, the third support grid 26C may have the at least one extended dimple 80 extending from a cell side 70, 72, 74, 76 that is different from a cell side 70, 72, 74, 76 having an extended dimple 80 on the first support grid 26A.

The present invention further provides for having different fuel rods 28 in adjacent cells 56 of the support grids 26 to have various shapes. That is, the fuel rod 28 in an adjacent cell 56 may have the identical shape to the fuel rod 28 described above as being shaped similar to a sine wave. Alternatively, the fuel rod 28 in the adjacent cell may be deformed in a mirror image shape, or with the deflections ninety degrees to the fuel rod 28 in an adjacent cell 56. The fuel rod 28 in an adjacent cell 56 may also be generally linear as in the prior art. The shape of the fuel rods 28 will effect the flow path of the coolant and may be configured in a defined pattern to control the heat transfer properties of the coolant flow.

Where there are two cell sides 70, 72, 74, 76 having extended dimples 80, the extended dimples 80 in vertically aligned cells 56 on different support grids 26 may be disposed in various configurations. For example, one support grid 26 may have extended dimples 80 extending from any two cell sides 70, 72, 74, 76. Another support grid also has an extended dimple 80 extending from any two cell sides 70, 72, 74, 76 wherein at least one cell side 70, 72, 74, 76 is a cell side 70, 72, 74, 76 other than one of the cell sides 70, 72, 74, 76 having an extended dimple 80 on the one support grid 26. As before, where there are three or more support grids 26A, 26B, 26C (described below), each having a set of vertically aligned cells 56 with extended dimples 80 on any two sides 70, 72, 74, 76, the third support grid 26C may have the extended dimples 80 extending from two cell sides 70, 72, 74, 76 and wherein the two cell sides 70, 72, 74, 76 are the same two cell sides 70, 72, 74, 76 as the cell sides 70, 72, 74, 76 having an extended dimple 80 on the first support grid 26A. Alternatively, the third support grid 26C may have the extended dimples 80 extending from two cell sides 70, 72, 74, 76 and wherein at least one extended dimple 80 extends from a cell side 70, 72, 74, 76 that is different from the two cell sides 70, 72, 74, 76 having an extended dimple 80 on the first support grid 26A.

An example of the present invention is shown schematically in Figure 5, wherein the first, lowest support grid 26 is identified as support grid 26A, the second, middle support grid 26 is identified as support grid 26B and the third, highest support grid 26 is identified as support grid 26C. While only three support grids 26 are shown, a fuel assembly 20 typically has more than three support grids 26. On each support grid 26 a single cell 56 in a similar location on each support grid 26A, 26B, 26C is shown. For clarity, only two sides, the first and third sides 70, 74, of the cell 56 are shown schematically. In the embodiment shown, the configuration of springs 60 and extended dimples 80 are as follows. The lowest support grid 26A has a spring 60 disposed on the cell first side 70 and two extended dimples 80 disposed on the cell third side 74. The middle support grid 26B has the spring 60 disposed on the cell third side 74 and the extended dimples 80 disposed on the cell first side 70. The highest support grid 26C has a spring 60 disposed on the cell first side 70 and two extended dimples 80 disposed on the cell third side 74. In this configuration, and assuming the support grids 26A, 26B, and 26C are generally evenly spaced, the fuel rod 28 is deformed into, generally, a sine wave shape. In this embodiment it is understood that the spring 60 and two dimples 62 extending from the second and fourth sides 72, 76 (not shown) extend a generally equal distance from the strap body 52, as in the prior art. Again, it is noted that the fuel rods 28 in adjacent vertically aligned sets of cells 56 may be deformed in the same or different configuration.

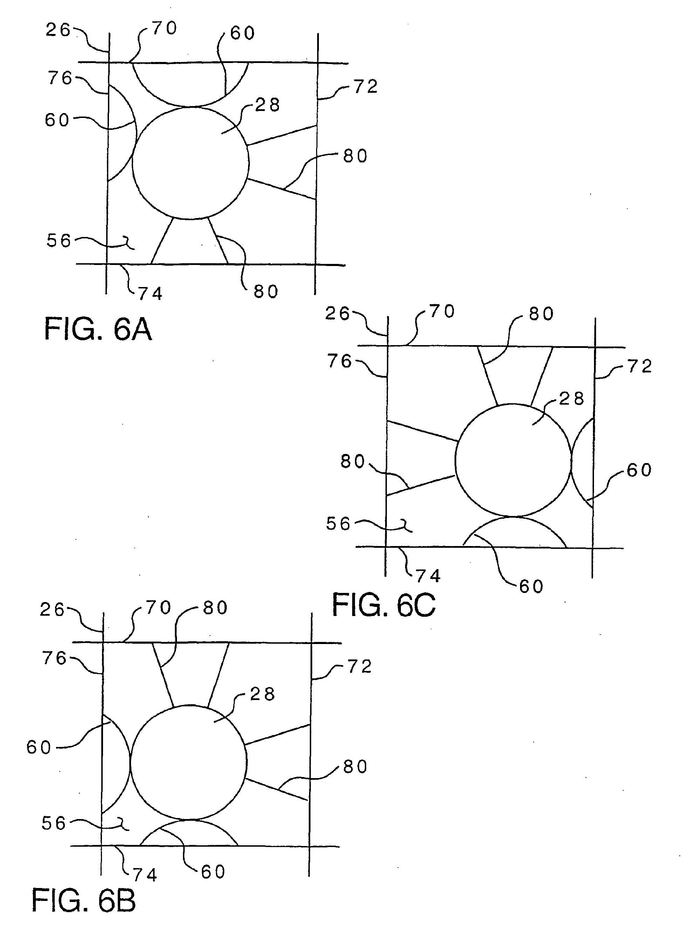

As shown in Figures 6A, 6B and 6C, the present invention further envisions a support grid 26 having one or more sets of vertically aligned cells 56 wherein each cell 56 has two extended dimples 80. In this embodiment, as shown in Figure 6A, a cell 56 in one support grid 26 has springs 60 on the first and fourth cell sides 70, 76 and extended dimples 80 on the second and third cell sides 72, 74. Another cell 56, as shown in Figure 6B, in the vertically aligned set may have springs 60 disposed on the third and fourth cell sides 74, 76 while extended dimples 80 are disposed on the first and second cell sides 70, 72. Further, as shown in Figure 6C, a cell 56 in another support grid 26 has extended dimples 80 on the first and fourth cell sides 70, 76 and springs 60 on the second and third cell sides 72, 74. In this configuration, a fuel rod 28 may be deformed into a generally spiral shape. Again, fuel rods 28 in adjacent cells 56 may be deformed, or not deformed, as required to control the heat transfer properties of the coolant flow.

The deformation of the fuel rods 28 creates a lateral force that is applied to the protuberances 53. The amount of force may be estimated by the formula: P=(48*E*I*Delta)/(2*L)³ wherein; E is the Young's modulus for the fuel rod cladding material, I=π*(D⁴-d⁴)/64, D is the fuel rod cladding outer diameter, d is the fuel rod cladding inner diameter, L is the distance between support grids, and Delta is the eccentricity magnitude. The preferred eccentricity is 0,25-1,5 mm (10-60 mils). The eccentricity is determined as the distance between the center of the fuel rod 28 adjacent to one set of protuberances 53 as compared to a line between the center of the fuel rod 28 at two adjacent sets of protuberances 53 as shown on Figure 5. In a typical fuel rod, it is expected to have about 0,9 N (0.2 pounds) of lateral force for each 0,25 mm (ten mils) of eccentricity. That is, fuel rod stress would be about 353 N/cm² (500 psi) for each 0,25 mm (ten mils) of eccentricity. This is approximately 100 times less than the typical spring stress.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is to be given the full breadth of the claims appended.

## Claims

1. A nuclear reactor fuel assembly (20) structured to support at least one non-linear fuel rod (28), said nuclear reactor fuel assembly (20) comprising:
a bottom nozzle (22);
a plurality of thimbles (24) extending upwardly from said bottom nozzle (22);
at least two support grids (26), a first support grid (26A) and a second support grid (26B), coupled to said thimbles (24), said at least two support grids (26) structured to support said at least one non-linear fuel rod (28);
said at least two support grids (26) each comprising a plurality of generally square cells (55) and wherein the cells (56) on said first support grid (26A) and said second support grid (26B) are generally vertically aligned;
each said cell (56) having a first side (70), a second side (72), a third side (74), a fourth side (76), with protrusions (53) extending from each said cell side (70, 72, 74, 76), and wherein said protrusions (53) are selected from the group including a spring (60), a dimple (62) or an extended dimple (80), with a spring (60) always disposed opposite of a dimple (62) or an extended dimple (80);
said first support grid (26A) includes at least one cell (56) having an extended dimple (80) extending from at least one cell side (70, 72, 74, 76);
said second support grid (26B) includes at least one cell (56) aligned with said first support grid (26A) at least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A); and
wherein said extended dimples (80) cause said fuel rod (28) to be deformed.

2. The nuclear reactor fuel assembly (20) of Claim 1 wherein:
said first support grid (26A) including at least one cell (56) having an extended dimple (80) extending from at least one cell side (70, 72, 74, 76) has multiple cells (56) having an extended dimple (80) extending from at least one cell side (70, 72, 74, 76); and
said second support grid (26B) including at least one cell (56) aligned with said first support grid (26A) at least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A) has multiple cells (56) having an extended dimple (80) extending from a cell side (70, 72, 74, 76) other than cell side (70, 72, 74, 76) having an extended dimple (80) on said first support grid (26A); and
wherein multiple fuels rods (28) are deformed in a defined pattern.

3. The nuclear reactor fuel assembly (20) of Claim 1 wherein:
said first support grid (26A) including at least one cell (56) having an extended dimple (80) extending from at least one cell side (70, 72, 74, 76) has extended dimples (80) extending from two cell sides (70, 72, 74, 76); and
said second support grid (26B) including at least one cell (56) aligned with said first support grid (26A) at least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A) has an extended dimple (80) extending from two cell sides (70, 72, 74, 76) wherein at least one cell side (70, 72, 74, 76) is a cell side (70, 72, 74, 76) other than one of the cell sides (70, 72, 74, 76) having an extended dimple (80) on said first support grid (26A).

4. The nuclear reactor fuel assembly (20) of Claim 1 wherein:
said at least two support grids (26) each include a plurality of straps (51), each strap (51) having an elongated, generally flat body (52) and a plurality of cell (55) portions, said plurality of straps (51) including a first set of straps (58) and a second set of straps (59);
said first set of straps (58) disposed in a spaced parallel relation to each other;
said second set of straps (59) disposed in a spaced parallel relation generally perpendicular to said first set of straps (58) and coupled to said first set of straps (58) thereby forming said plurality of generally square cells (55); and
said at least one extended dimple (80) extends from said strap body (52) between about 0,5 and 3,0 mm (0.02 and 0.12 inches).

5. The nuclear reactor fuel assembly (20) of Claim 4 wherein said generally square cells (56) have a width of about 12,60 mm (0.496 inches).

6. The nuclear reactor fuel assembly (20) of Claim 4 wherein said at least one extended dimple (80) extends from said strap body (52) about 2,0 mm (0.08 inches).

7. The nuclear reactor fuel assembly (20) of Claim 1 wherein:
at least two support grids (26) includes a third support grid (26C), said third support grid (26C) having a plurality of generally square cells (55), said cells (56) having a first side (70), a second side (72), a third side (74), a fourth side (76), with protrusions (53) extending from each said cell side (70, 72, 74, 76), and wherein said protrusions (53) are selected from the group including a spring (60), a dimple (62) or an extended dimple (80), with a spring (60) always disposed opposite of a dimple (62) or an extended dimple (80);
said third support grid (26C) includes at least one cell (56) aligned with said first support grid (26A) at least one cell (56) having an extended dimple (80), wherein said third support grid (26C) cell has an extended dimple (80) extending from a cell side (70, 72, 74, 76) the same as the cell side (70, 72, 74, 76) having an extended dimple (80) on said first support grid (26A); and
wherein said extended dimples (80) cause said fuel rod (28) to be deformed in a shape similar to a sine wave.

8. The nuclear reactor fuel assembly (20) of Claim 7 wherein:
said first support grid (26A) including at least one cell (56) having an extended dimple (80) extending from at least one cell side (70, 72, 74, 76) has multiple cells (56) having an extended dimple (80) extending from at least one cell side (70, 72, 74, 76); and
said second support grid (26B) including at least one cell (56) aligned with said first support grid at (26A) least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A) has multiple cells (56) having an extended dimple (80) extending from a cell side (70, 72, 74, 76) other than cell side (70, 72, 74, 76) having an extended dimple (80) on said first support grid (26A);
said third support grid (26C) at least one cell (56) aligned with said first support grid (26A) at least one cell (56) having an extended dimple (80), wherein said third support grid (26C) cell has an extended dimple (80) extending from a cell side (70, 72, 74, 76) the same as the cell side (70, 72, 74, 76) having an extended dimple (80) on said first support grid (26A) has multiple cells (56) having an extended dimple (80) extending from a cell side (70, 72, 74, 76) other than cell side (70, 72, 74, 76) having an extended dimple (80) on said first support grid (26A); and
wherein multiple fuel rods (28) are deformed in a shape similar to a sine wave.

9. The nuclear reactor fuel assembly (20) of Claim 7 wherein:
said first support grid (26A) including at least one cell (56) having an extended dimple (80) extending from at least one cell side (70, 72, 74, 76) has extended dimples (80) extending from two cell sides (70, 72, 74, 76);
said second support grid (26B) including at least one cell (56) aligned with said first support grid (26A) at least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A) has an extended dimple (80) extending from two cell sides (70, 72, 74, 76) wherein at least one cell side (70, 72, 74, 76) is a cell side (70, 72, 74, 76) other than one of the cell sides (70, 72, 74, 76) having an extended dimple (80) on said first support grid (26A); and
said third support grid (26C) at least one cell (56) aligned with said first support grid (26A) at least one cell (56) having an extended dimple (80) has an extended dimple (80) extending from two cell sides (70, 72, 74, 76) wherein said two cell sides (70, 72, 74, 76) are the same cell sides (70, 72, 74, 76) as the cell sides (70, 72, 74, 76) having an extended dimple (80) on said first support grid (26A).

10. The nuclear reactor fuel assembly (20) of Claim 7 wherein:
said at least two support grids (26) each include a plurality of straps (51), each strap (51) having an elongated, generally flat body (52) and a plurality of cell (55) portions, said plurality of straps (51) including a first set of straps (58) and a second set of straps (59);
said first set of straps (58) disposed in a spaced parallel relation to each other;
said second set of straps (59) disposed in a spaced parallel relation generally perpendicular to said first set of straps (58) and coupled to said first set of straps (58) thereby forming said plurality of generally square cells (55); and
said at least one extended dimple (80) extends from said strap body (52) between about 0,5 and 3,0 mm (0.02 and 0.12 inches).

11. The nuclear reactor fuel assembly (20) of Claim 10 wherein said generally square cells (56) have a width of about 12,60 mm (0.496 inches)

12. The nuclear reactor fuel assembly (20) of Claim 10 wherein said at least one extended dimple (80) extends from said strap body (52) about 2,0 mm (0.08 inches).

13. The nuclear reactor fuel assembly (20) of Claim 1 wherein:
at least two support grids (26) includes a third support grid (26C), said third support grid (26C) having a plurality of generally square cells (55), said cells having a first side (70), a second side (72), a third side (74), a fourth side (76), with protrusions (53) extending from each said cell side (70, 72, 74, 76), and wherein said protrusions (53) are selected from the group including a spring (60), a dimple (62) or an extended dimple (80), with a spring (60) always disposed opposite of a dimple (62) or an extended dimple (80);
said third support grid (26C) includes at least one cell (56) aligned with said first support grid (26A) at least one cell (56) having an extended dimple (80), wherein said third support grid (26C) cell has an extended dimple (80) extending from a cell side (70, 72, 74, 76) other than cell side (70, 72, 74, 76) having an extended dimple (80) on said first support grid (26A); and
wherein said extended dimples (80) cause said fuel rod (28) to be deformed.

14. The nuclear reactor fuel assembly (20) of Claim 13 wherein:
said first support grid (26A) including at least one cell (56) having an extended dimple (80) extending from at least one cell side (70, 72, 74, 76) has multiple cells (56) having an extended dimple (80) extending from at least one cell side (70, 72, 74, 76); and
said second support grid (26B) including at least one cell (56) aligned with said first support grid (26A) at least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A) has multiple cells (56) having an extended dimple (80) extending from a cell side (70, 72, 74, 76) other than cell side (70, 72, 74, 76) having an extended dimple (80) on said first support grid (26A);
said third support grid (26C) including at least one cell (56) aligned with said first support grid (26A) at least one cell (56) having an extended dimple (80), wherein said third support grid (26C) cell has an extended dimple (80) extending from a cell side (70, 72, 74, 76) other than cell side (70, 72, 74, 76) having an extended dimple (80) on said first support grid (26A) has multiple cells (56) having an extended dimple (80) extending from a cell side (70, 72, 74, 76) other than cell side (70, 72, 74, 76) having an extended dimple (80) on said first support grid (26A); and
wherein multiple fuels rods (28) are deformed in a defined pattern.

15. The nuclear reactor fuel assembly (20) of Claim 13 wherein:
said first support grid (26A) including at least one cell (56) having an extended dimple (80) extending from at least one cell side (70, 72, 74, 76) has extended dimples (80) extending from two cell sides (70, 72, 74, 76);
said second support grid (26B) including at least one cell (56) aligned with said first support grid (26A) at least one cell (56) having an extended dimple (80), wherein said second support grid (26B) cell has an extended dimple (80) extending from a cell side (70, 72, 74, 76) other than cell side (70, 72, 74, 76) having an extended dimple (80) on said first support grid (26A) has an extended dimple (80) extending from two cell sides (70, 72, 74, 76) wherein at least one cell side (70, 72, 74, 76) is a cell side (70, 72, 74, 76) other than one of the cell sides (70, 72, 74, 76) having an extended dimple (80) on said first support grid (26A); and
said third support grid (26C) including at least one cell (56) aligned with said first support grid (26A) at least one cell (56) having an extended dimple (80), wherein said third support grid (26C) cell has an extended dimple (80) extending from a cell side (70, 72, 74, 76) other than cell side (70, 72, 74, 76) having an extended dimple (80) on said first support grid (26A) has an extended dimple (80) extending from two cell sides (70, 72, 74, 76) wherein at least one cell side (70, 72, 74, 76) is a cell side (70, 72, 74, 76) other than one of the cell sides (70, 72, 74, 76) having an extended dimple (80) on said first support grid (26A).

16. The nuclear reactor fuel assembly (20) of Claim 13 wherein:
said at least two support grids (26) each include a plurality of straps (51), each strap (51) having an elongated, generally flat body (52) and a plurality of cell portions (55), said plurality of straps (51) including a first set of straps (58) and a second set of straps (59);
said first set of straps (58) disposed in a spaced parallel relation to each other;
said second set of straps (59) disposed in a spaced parallel relation generally perpendicular to said first set of straps (58) and coupled to said first set of straps (58) thereby forming said plurality of generally square cells (55); and
said at least one extended dimple (80) extends from said strap body (52) between about 0,3 and 3,0 mm (0.02 and 0.12 inches).

17. The nuclear reactor fuel assembly (20) of Claim 16 wherein said generally square cells (56) have a width of about 12,60 mm (0.496 inches).

18. The nuclear reactor fuel assembly (20) of Claim 16 wherein said at least one extended dimple (80) extends from said strap body (52) about 2,0 mm (0.08 inches)

19. The nuclear reactor fuel assembly (20) of Claim 1 wherein the deformation of the fuel rod (28) creates a lateral pressure on the fuel rod (28) of about 353 N/cm² (500 psi).

## Patentansprüche

1. Kernreaktorbrennelement (20), das so strukturiert ist, das es mindestens einen nicht geradlinigen Brennstab (28) abstützt, wobei das Kernreaktorbrennelement (20) aufweist:
ein unteres Mundstück (22),
eine Mehrzahl von aufwärts von dem unteren Mundstück (22) aus verlaufenden Führungsrohren (24),
mindestens zwei Stützgitter (26), nämlich ein erstes Stützgitter (26A) und ein zweites Stützgitter (26B), die mit den Führungsrohren (24) verbunden sind, wobei die mindestens zwei Stützgitter (26) so strukturiert sind, dass sie mindestens einen nicht geradlinigen Brennstab (28) abstützen,
wobei die mindestens zwei Stützgitter (26) jeweils eine Mehrzahl von etwa quadratischen Zellen (55) aufweisen, und wobei die Zellen (56) in dem genannten ersten Stützgitter (26A) und dem genannten zweiten Stützgitter (26B) etwa vertikal fluchtend sind,
wobei jede genannte Zelle (56) eine erste Seite (70), eine zweite Seite (72), eine dritte Seite (74), eine vierte Seite (76) aufweist, wobei Vorsprünge (53) von jeder der genannten Zellenseiten (70, 72, 74, 76) wegragen, und wobei die Vorsprünge (53) aus der Gruppe ausgewählt sind, die eine Feder (60), einen Noppen (62), oder einen verlängerten Noppen (80) umfasst, wobei eine Feder (60) stets gegenüber einem Noppen (62) oder einem verlängerten Noppen (80) angeordnet ist,
wobei das erste Stützgitter (26A) mindestens eine Zelle (56) mit einem verlängerten Noppen (80) aufweist, der von mindestens einer Zellenseite (70, 72, 74, 76) wegragt, und das zweite Stützgitter (26B) mindestens eine Zelle (56) aufweist, die mit der mindestens einen Zelle (56) mit einem verlängerten Noppen (80) des ersten Stützgitters (26A) fluchtet, wobei die genannte Zelle des zweiten Stützgitters (26B) einen verlängerten Noppen (80) aufweist, der von einer anderen Zellenseite (70, 72, 74, 76) als die Zellenseite (70, 72, 74, 76) mit einem verlängerten Noppen (80) des ersten Stützgitters (26A) wegragt, und
wobei die verlängerten Noppen (80) ein Verformen des Brennstabs (28) bewirken.

2. Kernreaktorbrennelement (20) nach Anspruch 1, wobei:
das erste Stützgitter (26A), das mindestens eine Zelle (56) mit einem verlängerten Noppen (80) aufweist, der von mindestens einer Zellenseite (70, 72, 74, 76) wegragt, mehrere Zellen (56) mit einem verlängerten Noppen (80) aufweist, die von mindestens einer Zellenseite (70, 72, 74, 76) wegragen und
das zweite Stützgitter (26B) mindestens eine Zelle (56) aufweist, die mit der mindestens einen Zelle (56) mit einem verlängerten Noppen (80) des ersten Stützgitters (26A) fluchtet, wobei die genannte Zelle des zweiten Stützgitters (26B) einen verlängerten Noppen (80) aufweist, der von einer anderen Zellenseite (70, 72, 74, 76) als die Zellenseite (70, 72, 74, 76) mit einem verlängerten Noppen (80) des ersten Stützgitters (26A) wegragt, mehrere Zellen (56) mit einem verlängerten Noppen (80) aufweist, die von einer anderen Zellenseite (70, 72, 74, 76) als die Zellenseite (70, 72, 74, 76) mit einem verlängerten Noppen (80) des ersten Stützgitters (26A) wegragt, und
wobei mehrere Trennstäbe (26) in einem definierten Muster verformt sind.

3. Kernreaktorbrennelement (20) nach Anspruch 1, wobei:
das erste Stützgitter (26A) mit mindestens einer Zelle (56) mit einem verlängerten Noppen (80), der von einer Zellenseite (70, 72, 74, 76) vorspringt, verlängerte Noppen (80) aufweist, die von zwei Zellenseiten (70, 72, 74, 76) vorspringen, und
das zweite Stützgitter (26B) mindestens eine Zelle (56) aufweist, die mit der mindestens einen Zelle (56) mit einem verlängerten Noppen (80) des ersten Stützgitters (26A) fluchtet, wobei die genannte Zelle des zweiten Stützgitters (26B) einen verlängerten Noppen (80) aufweist, der von einer anderen Zellenseite (70, 72, 74, 76) als die Zellenseite (70, 72, 74, 76) mit einem verlängerten Noppen (80) des ersten Stützgitters (26A) vorspringt, und einen verlängerten Noppen (80) aufweist, der von zwei Zellenseiten (70, 72, 74, 76) vorspringt, wobei mindestens eine Zellenseite (70, 72, 74, 76) eine andere Zellenseite (70, 72, 74, 76) als die Zellenseiten (70, 72, 74, 76) mit einem verlängerten Noppen (80) des ersten Stützgitters (26A) ist.

4. Kernreaktorbrennelement (20) nach Anspruch 1, wobei:
die genannten mindestens zwei Stützgitter (26) jeweils eine Mehrzahl von Streifen (51) aufweisen, wobei jeder Streifen (51) einen länglichen, im wesentlichen ebenen Körper (52) und eine Mehrzahl von Zellenteilen (55), wobei die Mehrzahl von Streifen (51) eine erste Gruppe von Streifen (58) und eine zweite Gruppe von Streifen (59) umfasst,
wobei die erste Gruppe von Streifen (58) in beabstandeter paralleler Beziehung zueinander angeordnet ist,
wobei die zweite Gruppe von Streifen (59) in einer beabstandeten parallelen Beziehung im wesentlichen senkrecht zu der ersten Gruppe von Streifen (58) angeordnet und mit der ersten Gruppe von Streifen (58) verbunden ist, wodurch die genannte Mehrzahl von im wesentlichen quadratischen Zellen (55) gebildet ist, und
wobei der mindestens eine verlängerte Noppen (80) von dem Streifenkörper (52) zwischen etwa 0,5 und 3,0 mm (0,02 bis 0,12 Zoll) wegragt.

5. Kernreaktorbrennelement (20) nach Anspruch 4, wobei die im wesentlichen quadratischen Zellen (56) eine Weite von etwa 12,60 mm (0,496 Zoll) haben.

6. Kernreaktorbrennelement (20) nach Anspruch 4, wobei der mindestens eine verlängerte Noppen (80) von dem Streifenkörper (52) um etwa 2,0 mm (0,08 Zoll) wegragt.

7. Kernreaktorbrennelement (20) nach Anspruch 1, wobei:
mindestens zwei Stützgitter (26) ein drittes Stützgitter (26C) umfassen, wobei das dritte Stützgitter (26C) eine Mehrzahl von etwa quadratischen Zellen (55) aufweist, wobei die Zellen (56) eine erste Seite (70), eine zweite Seite (72), und dritte Seite (74), eine vierte Seite (76) aufweisen, wobei Vorsprünge (53) von jeder Zellenseite (70, 72, 74, 76) wegragen, und wobei die genannten Vorsprünge (53) aus der Gruppe ausgewählt sind, die eine Feder (60), einen Noppen (62), oder einen verlängerten Noppen (80) umfasst, wobei eine Feder (60) stets gegenüber einem Noppen (62) oder einem verlängerten Noppen (80) angeordnet ist,
wobei das dritte Stützgitter (26C) mindestens eine Zelle (56) aufweist, die mit mindestens einer Zelle (56) des ersten Stützgitters (26A) mit einem verlängerten Noppen (80) fluchtet, wobei die genannte Zelle des dritten Stützgitters (26C) einen verlängerten Noppen (80) aufweist, der von der gleichen Zellenseite (70, 72, 74, 76) wie die Zellenseite (70, 72, 74, 76) mit einem verlängerten Noppen (80) an dem ersten Stützgitter (26A) wegragt, und
wobei die genannten verlängerten Noppen (80) bewirken, dass der Brennstab (28) in eine Form ähnlich einer Sinuswelle verformt ist.

8. Kernreaktorbrennelement (20) nach Anspruch 7, wobei:
das genannte erste Stützgitter (26A), das mindestens eine Zelle (56) mit einem von mindestens einer Zellenseite (70, 72, 74, 76) wegragenden verlängerten Noppen (80) aufweist, mehrfache Zellen (56) mit einem von mindestens einer Zellenseite (70, 72, 74, 76) wegragenden verlängerten Noppen (80) aufweist, und
das genannte zweite Stützgitter (26B) mindestens eine Zelle (56) aufweist, die mit der mindestens einen Zelle (56) des ersten Stützgitters (26A) mit einem verlängerten Noppen (80) fluchtet, wobei das zweite Stützgitter (26B) einen verlängerten Noppen (70) hat, der von einer anderen Zellenseite (70, 72, 74, 76) als der Zellenseite (70, 72, 74, 76) mit einem verlängerten Noppen (80) an dem ersten Stützgitter (26A) wegragt, und mehrfache Zellen (56) mit einem verlängerten Noppen (80) aufweist, der von einer anderen Zellenseite (70, 72, 74, 76) als der Zellenseite (70, 72, 74, 76) mit einem verlängerten Noppen (80) am ersten Stützgitter (26A) wegragt,
wobei die mindestens eine Zelle (56) des dritten Stützgitters (26C), die mit der mindestens einen Zelle (56) mit einem verlängerten Noppen (80) des ersten Stützgitters (26A) fluchtet, wobei die Zelle des dritten Stützgitters (26C) einen verlängerten Noppen (80) hat, der von der gleichen Zellenseite (70, 72, 74, 76) wie der Zellenseite (70, 72, 74, 76) mit einem verlängerten Noppen (80) an dem ersten Stützgitter (26A) wegragt, und mehrfache Zellen (56) hat, die einen verlängerten Noppen (80) aufweisen, der von einer anderen Zellenseite (70, 72, 74, 76) als der Zellenseite (70, 72, 74, 76) mit einem verlängerten Noppen (80) an dem ersten Stützgitter (26A) wegragt, und
wobei mehrfache Brennstäbe (28) in einer Form ähnlich einer Sinuswelle verformt sind.

9. Kernreaktorbrennelement (20) nach Anspruch 7, wobei:
das erste Stützgitter (26A), das mindestens eine Zelle (56) mit einem verlängerten Noppen (80) aufweist, der von mindestens einer Zellenseite (70, 72, 74, 76) wegragt, verlängerte Noppen (80) aufweist, die von zwei Zellenseiten (70, 72, 74, 76) wegragen,
das zweite Stützgitter (26B), das mindestens eine Zelle (56) aufweist, die mit der mindestens einen Zelle (56) mit einem verlängerten Noppen (80) des ersten Stützgitters (26A) fluchtet, wobei da die Zelle des zweiten Stützgitters (26B) einen verlängerten Noppen (80) aufweist, der von einer anderen Zellenseite (70, 72, 74, 76) als der Zellenseite (70, 72, 74, 76) mit einem verlängerten Noppen (80) an dem ersten Stützgitter (26) wegragt, einen von zwei Zellenseiten (70, 72, 74, 76) wegragenden verlängerten Noppen (80) aufweist, wobei mindestens eine Zellenseite (70, 72, 74, 76) eine andere Zellenseite (70, 72, 74, 76) als die Zellenseiten (70, 72, 74, 76) mit einem verlängerten Noppen (80) an dem ersten Stützgitter (26A) ist, und
die mindestens eine Zelle (56) des dritten Stützgitters (26C), die mit mindestens einer Zelle (56) mit einem verlängerten Noppen (80) des ersten Stützgitters (26A) fluchtet, einen von zwei Zellenseiten (70, 72, 74, 76) wegragenden verlängerten Noppen (80) aufweist, wobei die beiden Zellenseiten (70, 72, 74, 76) die gleichen Zellenseiten (70, 72, 74, 76) wie die Zellenseiten (70, 72, 74, 76) mit einem verlängerten Noppen (80) an dem ersten Stützgitter (26A) sind.

10. Kernreaktorbrennelement (20) nach Anspruch 7, wobei:
die mindestens zwei Stützgitter (26) jeweils eine Mehrzahl von Streifen (51) umfassen, wobei jeder Streifen (51) einen länglichen, im wesentlichen ebenen Körper (52) und eine Mehrzahl von Zellenteilen (55) aufweist, wobei die Mehrzahl von Streifen (51) eine erste Gruppe von Streifen (58) und eine zweite Gruppe von Streifen (59) umfasst,
wobei die erste Gruppe von Streifen (58) in beabstandeter paralleler Beziehung zueinander angeordnet ist,
wobei die zweite Gruppe von Streifen (59) in beabstandeter paralleler Beziehung etwa senkrecht zu der ersten Gruppe von Streifen (58) angeordnet und mit der ersten Gruppe von Streifen (58) verbunden ist, wodurch die genannte Vielzahl von etwa quadratischen Zellen (55) gebildet ist, und
der mindestens eine verlängerte Noppen (80) von dem Streifenkörper (52) zwischen 0,5 und 3,0 mm (0,02 und 0,12 Zoll) wegragt.

11. Kernreaktorbrennelement (20) nach Anspruch 10, wobei die etwa quadratischen Zellen (56) eine Weite von etwa 12,60 mm (0,496 Zoll) haben.

12. Kernreaktorbrennelement (20) nach Anspruch 10, wobei der mindestens eine verlängerte Noppen (80) von dem Streifenkörper (52) um etwa 2,0 mm (0,08 Zoll) wegragt.

13. Kernreaktorbrennelement (20) nach Anspruch 1, wobei:
mindestens zwei Stützgitter (26) ein drittes Stützgitter (26C) umfassen, wobei das dritte Stützgitter (26C) eine Mehrzahl etwa quadratischer Zellen (55) aufweist, wobei die Zellen eine erste Seite (70), eine zweite Seite (72), eine dritte Seite (74), eine vierte Seite (76) aufweisen, wobei Vorsprünge (53) von jeder der Zellenseiten (70, 72, 74, 76) wegragen, und wobei die Vorsprünge (53) aus der Gruppe ausgewählt sind, die eine Feder (60), einen Noppen (62), oder einen verlängerten Noppen (80) umfasst, wobei stets eine Feder (60) gegenüber einem Noppen (62) oder einem verlängerten Noppen (80) angeordnet ist,
wobei das dritte Stützgitter (26C) mindestens eine Zelle (56) aufweist, die mit der mindestens einen Zelle (56) des ersten Stützgitters (26A) mit einem verlängerten Noppen (80) fluchtet, wobei die genannte Zelle des dritten Stützgitters (26C) einen verlängerten Noppen (80) aufweist, der von einer anderen Zellenseite (70, 72, 74, 76) als der Zellenseite (70, 72, 74, 76) mit einem verlängerten Noppen (80) an dem ersten Stützgitter (26A) wegragt, und
wobei die verlängerten Noppen (80) bewirken, dass der Brennstab (28) verformt wird.

14. Kernreaktorbrennelement (20) nach Anspruch 13, wobei:
das erste Stützgitter (26A), das mindestens eine Zelle (56) mit einem von mindestens einer Zellenseite (70, 72, 74, 76) wegragenden verlängerten Noppen (80) aufweist, mehrfache Zellen (56) mit einem von mindestens einer Zellenseite (70, 72, 74, 76) wegragenden verlängerten Noppen (80) aufweist, und
das zweite Stützgitter (26B), das mindestens eine Zelle (56) aufweist, die mit der mindestens einen Zelle (56) des ersten Stützgitters (26A) mit einem verlängerten Noppen fluchtet, wobei die Zelle des zweiten Stützgitters (26B) einen verlängerten Noppen (80) aufweist, der von einer anderen Zellenseite (70, 72, 74, 76) als der Zellenseite (70, 72, 74, 76) mit einem verlängerten Noppen (80) an dem ersten Stützgitter (26A) wegragt, mehrfache Zellen (56) mit einem verlängerten Noppen (80) aufweist, der von einer anderen Zellenseite (70, 72, 74, 76) als der Zellenseite (70, 72, 74, 76) mit einem verlängerten Noppen (80) an dem ersten Stützgitter (26A) wegragt,
das dritte Stützgitter (26C), das mindestens eine Zelle (56) aufweist, die mit der mindestens einen Zelle (56) des ersten Stützgitters (26A) mit einem verlängerten Noppen (80) fluchtet, wobei die Zelle des dritten Stützgitters (26C) einen verlängerten Noppen (80) hat, der von einer anderen Zellenseite (70, 72, 74, 76) als der Zellenseite (70, 72, 74, 76) mit einem verlängerten Noppen (80) an dem ersten Stützgitter (26A) wegragt, mehrfache Zellen (56) aufweist, die einen verlängerten Noppen (80) haben, der von einer anderen Zellenseite (70, 72, 74, 76) als der Zellenseite (70, 72, 74, 76) mit einem verlängerten Noppen (80) an dem ersten Stützgitter (26A) wegragt, und
wobei mehrfache Brennstäbe (28) in einem definierten Muster verformt sind.

15. Kernreaktorbrennelement (20) nach Anspruch 13, wobei:
das erste Stützgitter (26A), das mindestens eine Zelle (56) mit einem verlängerten Noppen (80) aufweist, der von mindestens einer Zellenseite (70, 72, 74, 76) wegragt, verlängerte Noppen (80) aufweist, die von zwei Zellenseiten (70, 72, 74, 76) wegragen,
das zweite Stützgitter (26B), das mindestens eine Zelle (56) aufweist, die mit der mindestens einen Zelle (56) mit einem verlängerten Noppen (80) des ersten Stützgitters (26A) fluchtet, wobei die genannte Zelle des zweiten Stützgitters (26B) einen verlängerten Noppen (80) aufweist, der von einer anderen Zellenseite (70, 72, 74, 76) als der Zellenseite (70, 72, 74, 76) mit einem verlängerten Noppen (80) an dem ersten Stützgitter (26A) wegragt, einen verlängerten Noppen (80) aufweist, der von zwei Zellenseiten (70, 72, 74, 76) wegragt, wobei mindestens eine Zellenseite (70, 72, 74, 76) eine andere Zellenseite (70, 72, 74, 76) als eine der Zellenseiten (70, 72, 74, 76) mit einem verlängerten Noppen (80) an dem ersten Stützgitter (26A) ist, und
das dritte Stützgitter (26C), das mindestens eine Zelle (56) aufweist, die mit der mindestens einen Zelle (56) des ersten Stützgitters (26A) mit einem verlängerten Noppen (80) fluchtet, wobei die genannte Zelle des dritten Stützgitters (26C) einen verlängerten Noppen (80) aufweist, der von einer anderen Zellenseite (70, 72, 74, 76) als der Zellenseite (70, 72, 74, 76) mit einem verlängerten Noppen (80) an dem ersten Stützgitter (26A) wegragt, einen verlängerten Noppen (80) aufweist, der von zwei Zellenseiten (70, 72, 74, 76) wegragt, wobei mindestens eine Zellenseite (70, 72, 74, 76) eine andere Zellenseite (70, 72, 74, 76) als eine der Zellenseiten (70, 72, 74, 76) mit einem verlängerten Noppen (80) an dem ersten Stützgitter (26A) ist.

16. Kernreaktorbrennelement (20) nach Anspruch 13, wobei:
die mindestens zwei Stützgitter (26) jeweils eine Mehrzahl von Streifen (51) umfassen, wobei jeder Streifen (51) einen länglichen, etwa ebenen Körper (52) und eine Mehrzahl von Zellenteilen (55) aufweist, wobei die Mehrzahl von Streifen (51) eine erste Gruppe von Streifen (58) und eine zweite Gruppe von Streifen (59) umfasst,
die erste Gruppe von Streifen (58) in beabstandeter paralleler Beziehung zueinander angeordnet ist,
die zweite Gruppe von Streifen (59) in beabstandeter paralleler Beziehung etwa senkrecht zu der ersten Gruppe von Streifen (58) angeordnet und mit der ersten Gruppe von Streifen (58) verbunden ist, wodurch die genannte Mehrzahl von etwa quadratischen Zellen (55) gebildet ist, und
der mindestens eine verlängerte Noppen (80) von dem Streifenkörper (52) zwischen etwa 0,5 und 3,0 mm (0,02 und 0,12 Zoll) wegragt.

17. Kernreaktorbrennelement (20) nach Anspruch 16, wobei die etwa quadratischen Zellen (56) eine Weite von etwa 12,60 mm (0,496 Zoll) aufweisen.

18. Kernreaktorbrennelement (20) nach Anspruch 16, wobei der mindestens eine verlängerte Noppen (80) von dem Streifenkörper (52) um etwa 2,0 mm (0,08 Zoll) wegragt.

19. Kernreaktorbrennelement (20) nach Anspruch 1, wobei die Verformung des Brennstabs (28) einen seitlichen Druck auf den Brennstab (28) von etwa 353 N/cm² (500 psi) erzeugt.

## Revendications

1. Assemblage combustible de réacteur nucléaire (20) structuré pour supporter au moins un crayon de combustible non linéaire (28), ledit assemblage combustible de réacteur nucléaire (20) comprenant :
un gicleur inférieur (22) ;
une pluralité de chaussettes (24) s'étendant vers le haut à partir dudit gicleur inférieur (22) ;
au moins deux grilles de support (26), une première grille de support (26A) et une deuxième grille de support (26B), couplées aux dites chaussettes (24), lesdites au moins deux grilles de support (26) étant structurées pour supporter ledit au moins un crayon de combustible non linéaire (28) ;
lesdites au moins deux grilles de support (26) comprenant chacune une pluralité de cellules généralement carrées (55) et dans lequel les cellules (56) sur ladite première grille de support (26A) et ladite deuxième grille de support (26B) sont généralement alignées verticalement ;
chaque dite cellule (56) ayant un premier côté (70), un deuxième côté (72), un troisième côté (74), un quatrième côté (76), avec des protubérances (53) s'étendant depuis chaque dit côté de cellule (70, 72, 74, 76), et dans lequel lesdites protubérances (53) sont sélectionnées dans le groupe comprenant un ressort (60), une dépression (62) ou une dépression étendue (80), avec un ressort (60) toujours disposé à l'opposé d'une dépression (62) ou d'une dépression étendue (80) ;
ladite première grille de support (26A) comprend au moins une cellule (56) ayant une dépression étendue (80) s'étendant depuis au moins un côté de cellule (70, 72, 74, 76) ;
ladite deuxième grille de support (26B) comprend au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A) ; et
dans lequel lesdites dépressions étendues (80) provoquent la déformation dudit crayon de combustible (28).

2. Assemblage combustible de réacteur nucléaire (20) selon la revendication 1, dans lequel :
ladite première grille de support (26A), comprenant au moins une cellule (56) ayant une dépression étendue (80) s'étendant depuis au moins un côté de cellule (70, 72, 74, 76), a de multiples cellules (56) ayant une dépression étendue (80) s'étendant depuis au moins un côté de cellule (70, 72, 74, 76) ; et
ladite deuxième grille de support (26B), comprenant au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A), a de multiples cellules (56) ayant une dépression étendue (80) s'étendant depuis un côté de cellule (70, 72, 74, 76) autre que le côté de cellule (70, 72, 74, 76) ayant une dépression étendue (80) sur ladite première grille de support (26A) ; et
dans lequel de multiples crayons de combustible (28) sont déformés dans un motif défini.

3. Assemblage combustible de réacteur nucléaire (20) selon la revendication 1, dans lequel :
ladite première grille de support (26A), comprenant au moins une cellule (56) ayant une dépression étendue (80) s'étendant depuis au moins un côté de cellule (70, 72, 74, 76), a des dépressions étendues (80) s'étendant depuis deux côtés de cellule (70, 72, 74, 76) ; et
ladite deuxième grille de support (26B), comprenant au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A), a une dépression étendue (80) s'étendant depuis deux côtés de cellule (70, 72, 74, 76), dans lequel au moins un côté de cellule (70, 72, 74, 76) est un côté de cellule (70, 72, 74, 76) autre que l'un des côtés de cellule (70, 72, 74, 76) ayant une dépression étendue (80) sur ladite première grille de support (26A).

4. Assemblage combustible de réacteur nucléaire (20) selon la revendication 1, dans lequel :
lesdites au moins deux grilles de support (26) comprennent chacune une pluralité de sangles (51), chaque sangle (51) ayant un corps allongé généralement plat (52) et une pluralité de parties de cellule (55), ladite pluralité de sangles (51) comprenant un premier ensemble de sangles (58) et un deuxième ensemble de sangles (59) ;
ledit premier ensemble de sangles (58) étant disposé dans une relation parallèle espacées entre elles ;
ledit deuxième ensemble de sangles (59) étant disposé dans une relation parallèle espacée généralement perpendiculaire au dit premier ensemble de sangles (58) et couplé au dit premier ensemble de sangles (58) en formant de ce fait ladite pluralité de cellules généralement carrées (55) ; et
ladite au moins une dépression étendue (80) s'étend depuis ledit corps de sangle (52) entre environ 0,5 et 3,0 mm (0,02 et 0,12 pouce).

5. Assemblage combustible de réacteur nucléaire (20) selon la revendication 4, dans lequel lesdites cellules généralement carrées (56) ont une largeur d'environ 12,60 mm (0,496 pouce).

6. Assemblage combustible de réacteur nucléaire (20) selon la revendication 4, dans lequel ladite au moins une dépression étendue (80) s'étend depuis ledit corps de sangle (52) d'environ 2,0 mm (0,08 pouce).

7. Assemblage combustible de réacteur nucléaire (20) selon la revendication 1, dans lequel :
au moins deux grilles de support (26) comprennent une troisième grille de support (26C), ladite troisième grille de support (26C) ayant une pluralité de cellules généralement carrées (55), lesdites cellules (56) ayant un premier côté (70), un deuxième côté (72), un troisième côté (74), un quatrième côté (76), avec des protubérances (53) s'étendant depuis chaque dit côté de cellule (70, 72, 74, 76), et dans lequel lesdites protubérances (53) sont sélectionnées dans le groupe comprenant un ressort (60), une dépression (62) ou une dépression étendue (80), avec un ressort (60) toujours disposé à l'opposé d'une dépression (62) ou d'une dépression étendue (80) ;
ladite troisième grille de support (26C) comprend au moins une cellule (56) alignée avec ladite au moins une cellule (56) ayant une dépression étendue (80) sur la première grille de support (26A), dans lequel la cellule de ladite troisième grille de support (26C) a une dépression étendue (80) s'étendant depuis un côté de cellule (70, 72, 74, 76) identique au côté de cellule (70, 72, 74, 76) ayant une dépression étendue (80) sur ladite première grille de support (26A) ; et
dans lequel lesdites dépressions étendues (80) provoquent la déformation dudit crayon de combustible (28) dans une forme similaire à une onde sinusoïdale.

8. Assemblage combustible de réacteur nucléaire (20) selon la revendication 7, dans lequel :
ladite première grille de support (26A), comprenant au moins une cellule (56) ayant une dépression étendue (80) s'étendant depuis au moins un côté de cellule (70, 72, 74, 76), a de multiples cellules (56) ayant une dépression étendue (80) s'étendant depuis au moins un côté de cellule (70, 72, 74, 76) ; et
ladite deuxième grille de support (26B), comprenant au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A), a de multiples cellules (56) ayant une dépression étendue (80) s'étendant depuis un côté de cellule (70, 72, 74, 76) autre que le côté de cellule (70, 72, 74, 76) ayant une dépression étendue (80) sur ladite première grille de support (26A) ;
ladite troisième grille de support (26C), comprenant au moins une cellule (56) alignée avec ladite au moins une cellule (56) ayant une dépression étendue (80) sur la première grille de support (26A), dans lequel la cellule de ladite troisième grille de support (26C) a une dépression étendue (80) s'étendant depuis un côté de cellule (70, 72, 74, 76) identique au côté de cellule (70, 72, 74, 76) ayant une dépression étendue (80) sur ladite première grille de support (26A), a de multiples cellules (56) ayant une dépression étendue (80) s'étendant depuis un côté de cellule (70, 72, 74, 76) autre que le côté de cellule (70, 72, 74, 76) ayant une dépression étendue (80) sur ladite première grille de support (26A) ; et
dans lequel de multiples crayons de combustible (28) sont déformés dans une forme similaire à une onde sinusoïdale.

9. Assemblage combustible de réacteur nucléaire (20) selon la revendication 7, dans lequel :
ladite première grille de support (26A), comprenant au moins une cellule (56) ayant une dépression étendue (80) s'étendant depuis au moins un côté de cellule (70, 72, 74, 76), a des dépressions étendues (80) s'étendant depuis deux côtés de cellule (70, 72, 74, 76) ;
ladite deuxième grille de support (26B), comprenant au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A), a une dépression étendue (80) s'étendant depuis deux côtés de cellule (70, 72, 74, 76), dans lequel au moins un côté de cellule (70, 72, 74, 76) est un côté de cellule (70, 72, 74, 76) autre que l'un des côtés de cellule (70, 72, 74, 76) ayant une dépression étendue (80) sur ladite première grille de support (26A) ; et
ladite troisième grille de support (26C), comprenant au moins une cellule (56) alignée avec ladite au moins une cellule (56) ayant une dépression étendue (80) sur la première grille de support (26A), a une dépression étendue (80) s'étendant depuis deux côtés de cellule (70, 72, 74, 76), dans lequel lesdits deux côtés de cellule (70, 72, 74, 76) sont les mêmes côtés de cellule (70, 72, 74, 76) que les côtés de cellule (70, 72, 74, 76) ayant une dépression étendue (80) sur ladite première grille de support (26A).

10. Assemblage combustible de réacteur nucléaire (20) selon la revendication 7, dans lequel :
lesdites au moins deux grilles de support (26) comprennent chacune une pluralité de sangles (51), chaque sangle (51) ayant un corps allongé généralement plat (52) et une pluralité de parties de cellule (55), ladite pluralité de sangles (51) comprenant un premier ensemble de sangles (58) et un deuxième ensemble de sangles (59) ;
ledit premier ensemble de sangles (58) étant disposé dans une relation parallèle espacées entre elles ;
ledit deuxième ensemble de sangles (59) étant disposé dans une relation parallèle espacée généralement perpendiculaire au dit premier ensemble de sangles (58) et couplé au dit premier ensemble de sangles (58) en formant de ce fait ladite pluralité de cellules généralement carrées (55) ; et
ladite au moins une dépression étendue (80) s'étend depuis ledit corps de sangle (52) entre environ 0,5 et 3,0 mm (0,02 et 0,12 pouce).

11. Assemblage combustible de réacteur nucléaire (20) selon la revendication 10, dans lequel lesdites cellules généralement carrées (56) ont une largeur d'environ 12,60 mm (0,496 pouce).

12. Assemblage combustible de réacteur nucléaire (20) selon la revendication 10, dans lequel ladite au moins une dépression étendue (80) s'étend depuis ledit corps de sangle (52) d'environ 2,0 mm (0,08 pouce).

13. Assemblage combustible de réacteur nucléaire (20) selon la revendication 1, dans lequel :
au moins deux grilles de support (26) comprennent une troisième grille de support (26C), ladite troisième grille de support (26C) ayant une pluralité de cellules généralement carrées (55), lesdites cellules ayant un premier côté (70), un deuxième côté (72), un troisième côté (74), un quatrième côté (76), avec des protubérances (53) s'étendant depuis chaque dit côté de cellule (70, 72, 74, 76), et dans lequel lesdites protubérances (53) sont sélectionnées dans le groupe comprenant un ressort (60), une dépression (62) ou une dépression étendue (80), avec un ressort (60) toujours disposé à l'opposé d'une dépression (62) ou d'une dépression étendue (80) ;
ladite troisième grille de support (26C) comprend au moins une cellule (56) alignée avec ladite au moins une cellule (56) ayant une dépression étendue (80) sur la première grille de support (26A), dans lequel la cellule de ladite troisième grille de support (26C) a une dépression étendue (80) s'étendant depuis un côté de cellule (70, 72, 74, 76) autre que le côté de cellule (70, 72, 74, 76) ayant une dépression étendue (80) sur ladite première grille de support (26A) ; et
dans lequel lesdites dépressions étendues (80) provoquent la déformation dudit crayon de combustible (28).

14. Assemblage combustible de réacteur nucléaire (20) selon la revendication 13, dans lequel :
ladite première grille de support (26A), comprenant au moins une cellule (56) ayant une dépression étendue (80) s'étendant depuis au moins un côté de cellule (70, 72, 74, 76), a de multiples cellules (56) ayant une dépression étendue (80) s'étendant depuis au moins un côté de cellule (70, 72, 74, 76) ; et
ladite deuxième grille de support (26B) comprenant au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A), a de multiples cellules (56) ayant une dépression étendue (80) s'étendant depuis un côté de cellule (70, 72, 74, 76) autre que le côté de cellule (70, 72, 74, 76) ayant une dépression étendue (80) sur ladite première grille de support (26A) ;
ladite troisième grille de support (26C) comprenant au moins une cellule (56) alignée avec ladite au moins une cellule (56) ayant une dépression étendue (80) sur la première grille de support (26A), dans lequel la cellule de ladite troisième grille de support (26C) a une dépression étendue (80) s'étendant depuis un côté de cellule (70, 72, 74, 76) autre que le côté de cellule (70, 72, 74, 76) ayant une dépression étendue (80) sur ladite première grille de support (26A), a de multiples cellules (56) ayant une dépression étendue (80) s'étendant depuis un côté de cellule (70, 72, 74, 76) autre que le côté de cellule (70, 72, 74, 76) ayant une dépression étendue (80) sur ladite première grille de support (26A) ; et
dans lequel de multiples crayons de combustible (28) sont déformés dans un motif défini.

15. Assemblage combustible de réacteur nucléaire (20) selon la revendication 13, dans lequel :
ladite première grille de support (26A), comprenant au moins une cellule (56) ayant une dépression étendue (80) s'étendant depuis au moins un côté de cellule (70, 72, 74, 76), a des dépressions étendues (80) s'étendant depuis deux côtés de cellule (70, 72, 74, 76) ;
ladite deuxième grille de support (26B), comprenant au moins une cellule (56) alignée avec ladite au moins une cellule (56) ayant une dépression étendue (80) sur la première grille de support (26A), dans lequel la cellule de ladite deuxième grille de support (26B) a une dépression étendue (80) s'étendant depuis un côté de cellule (70, 72, 74, 76) autre que le côté de cellule (70, 72, 74, 76) ayant une dépression étendue (80) sur ladite première grille de support (26A), a une dépression étendue (80) s'étendant depuis deux côtés de cellule (70, 72, 74, 76), dans lequel au moins un côté de cellule (70, 72, 74, 76) est un côté de cellule (70, 72, 74, 76) autre que l'un des côtés de cellule (70, 72, 74, 76) ayant une dépression étendue (80) sur ladite première grille de support (26A) ; et
ladite troisième grille de support (26C) comprenant au moins une cellule (56) alignée avec ladite au moins une cellule (56) ayant une dépression étendue (80) sur la première grille de support (26A), dans lequel la cellule de ladite troisième grille de support (26C) a une dépression étendue (80) s'étendant depuis un côté de cellule (70, 72, 74, 76) autre que le côté de cellule (70, 72, 74, 76) ayant une dépression étendue (80) sur ladite première grille de support (26A), a une dépression étendue (80) s'étendant depuis deux côtés de cellule (70, 72, 74, 76), dans lequel au moins un côté de cellule (70, 72, 74, 76) est un côté de cellule (70, 72, 74, 76) autre que l'un des côtés de cellule (70, 72, 74, 76) ayant une dépression étendue (80) sur ladite première grille de support (26A).

16. Assemblage combustible de réacteur nucléaire (20) selon la revendication 13, dans lequel :
lesdites au moins deux grilles de support (26) comprennent chacune une pluralité de sangles (51), chaque sangle (51) ayant un corps allongé généralement plat (52) et une pluralité de parties de cellule (55), ladite pluralité de sangles (51) comprenant un premier ensemble de sangles (58) et un deuxième ensemble de sangles (59) ;
ledit premier ensemble de sangles (58) étant disposé dans une relation parallèle espacées entre elles ;
ledit deuxième ensemble de sangles (59) étant disposé dans une relation parallèle espacée généralement perpendiculaire au dit premier ensemble de sangles (58) et couplé au dit premier ensemble de sangles (58) en formant de ce fait ladite pluralité de cellules généralement carrées (55) ; et
ladite au moins une dépression étendue (80) s'étend depuis ledit corps de sangle (52) entre environ 0,5 et 3,0 mm (0,02 et 0,12 pouce).

17. Assemblage combustible de réacteur nucléaire (20) selon la revendication 16, dans lequel lesdites cellules généralement carrées (56) ont une largeur d'environ 12,60 mm (0,496 pouce).

18. Assemblage combustible de réacteur nucléaire (20) selon la revendication 16, dans lequel ladite au moins une dépression étendue (80) s'étend depuis ledit corps de sangle (52) d'environ 2,0 mm (0,08 pouce).

19. Assemblage combustible de réacteur nucléaire (20) selon la revendication 1, dans lequel la déformation du crayon de combustible (28) crée une pression latérale sur le crayon de combustible (28) d'environ 353 N/cm² (500 psi).
